# EUROPÄISCHE PATENTSCHRIFT

(11) **EP 4 101 028 B1**
(45) Veröffentlichungstag und Bekanntmachung des Hinweises auf die Patenterteilung: **02.07.2025**
(21) Anmeldenummer: 21702631.9
(22) Anmeldetag: 28.01.2021
(51) Int. Cl.: H01R 4/30, H01R 9/16, H02K 5/22, H01R 4/34, H01R 9/24, H01R 11/09

(54) **KOPPELSYSTEM ZUR HERSTELLUNG EINER ELEKTRISCHEN VERBINDUNG**
COUPLING SYSTEM FOR ESTABLISHING AN ELECTRIC CONNECTION
SYSTÈME DE COUPLAGE POUR ÉTABLIR UNE CONNEXION ÉLECTRIQUE

(30) Priorität: 05.02.2020 DE 102020102839
(43) Veröffentlichungstag der Anmeldung: 14.12.2022
(73) Patentinhaber: Voith Patent GmbH, 89522 Heidenheim (DE)
(72) Erfinder: SCHÜTZ, Rainer, 73450 Neresheim (DE); TONEATTO, Marco, 89518 Heidenheim (DE)
(86) Internationale Anmeldenummer: PCT/EP2021/051973
(87) Internationale Veröffentlichungsnummer: WO 2021/156134

(56) Entgegenhaltungen:
- DE-A1- 102014 201 190
- US-A- 3 850 501
- US-A- 4 690 470
- US-A1- 2011 070 761

## Beschreibung

Die Erfindung betrifft einen Steckeinsatz für ein Koppelsystem zur Herstellung einer elektrischen Verbindung zwischen zwei elektrischen Komponenten.

Derartige Koppelsysteme werden beispielsweise benötigt, um eine elektrische Maschine, die in einem Gehäuse angeordnet ist, an eine Stromversorgung anzuschließen. Der Stator einer derartigen E-Maschine umfasst meist eine Mehrzahl von Spulen, die über einzelne Verbindungen stromleitend mit der Stromversorgung bzw. dem Umrichter der Stromversorgung verbunden sind.

Aus der DE 10 2011 117 433 A1 ist ein Koppelsystem bekannt. Hier wird eine elektrisch leitende Verbindung zwischen Elektromotor und Ansteuereinheit vorgeschlagen, die im Bereich einer Wandungsöffnung erfolgt und wenigstens ein die Wandungsöffnung verschließendes, isolierendes Bauteil aufweist, welches zur Halterung des zum Elektromotor zugeordneten elektrischen Anschlussteils und zur Halterung des zur Ansteuereinheit zugeordneten elektrischen Anschlussteils dient. Zur Sicherstellung des elektrischen Kontaktes ist ein Überlappungsbereich der Anschlussteile vorgesehen und die Anschlussteile werden mittels einer Schraubenverbindung zueinander fixiert.

Ein weiteres Koppelsystem ist aus der DE10 2014 201 190 A1 bekannt. Hier ist für jeden Pol des mehrpoligen startorseitigen Anschlusses eine einzeln ausgebildete Verbindungsbuchse vorgesehen.

Aus der US 3 850 501 A und der US 4 690 470 A sind weitere Durchführungsvorrichtungen bekannt, um einen Stromanschluss durch eine Gehäusewand umzusetzen.

Versuche haben allerdings ergeben, dass die bekannten Koppelsysteme oder auch Stromdurchführungen beim Einsatz in Kraftfahrzeugen, insbesondere durch die große Leistungsübertragung und die auftretenden Vibrationen, auf Dauer den Belastungen nicht standhalten.

Aufgabe der Erfindung ist es, einen Steckeinsatz für ein Koppelsystem zur Herstellung einer elektrischen Verbindung vorzuschlagen, dass eine zuverlässige und kostengünstige Stromdurchführung durch ein Maschinengehäuse ermöglicht, und das eine einfache und prozesssichere Montage ermöglicht.

Die Aufgabe wird erfindungsgemäß durch eine Ausführung entsprechend Anspruch 1 gelöst. Weitere vorteilhafte Merkmale der erfindungsgemäßen Ausführung finden sich in den Unteransprüchen.

Es wird ein Koppelsystem zur Herstellung einer elektrischen Verbindung zwischen zwei elektrischen Komponenten, wobei die erste Komponente in einem Gehäuse positioniert ist und zumindest eine Stromschiene und die zweite Komponente außerhalb des Gehäuses angeordnet ist und zumindest einen Stromanschluss umfasst, und wobei mittels dem Koppelsystem eine elektrisch leitende Verbindung zwischen der Stromschiene und dem Stromanschluss herstellbar ist, umfassend einen in das Gehäuse einsteckbaren Steckeinsatz vorgeschlagen.

Erfindungsgemäß umfasst der Steckeinsatz ein Isolatorteil, in dem eine Hülse und eine Scheibenmutter fixiert sind, wobei das Isolatorteil eine Aussparung aufweist, die derart angeordnet ist, dass die Stromschiene durch die Aussparung zwischen die Hülse und die Scheibenmutter einbringbar ist. Im Sinne der Erfindung wird unter Einbringen verstanden, dass die Stromschiene bei der Montage durch die Aussparung des Isolatorteils in einen Klemmraum zwischen Hülse und Scheibenmutter geschoben werden kann.

Vorzugsweise besteht das Isolierteil aus einem elastischen Material und kann Dichtlippen sowie einen Bund aufweisen. Das Isolatorteil muss flexibel sein, damit der Steckeinsatz seine Lage im Raum verändern kann, so dass Toleranzschwankungen der starren Stromschiene ausgeglichen werden können.

Weiterhin ist es vorteilhaft, wenn die Stromschiene, der Stromanschluß und die Hülse jeweils eine Bohrung aufweisen, durch die eine Schraube steckbar ist, so dass der Stromanschluss, die Hülse und die Stromschiene zwischen Schraube und Scheibenmutter zueinander fixierbar sind. Die Kontaktflächen für die Stromübertragung sind besonders groß, wenn diese Ringförmig ausgeführt sind.

Damit die Aussparung im Isolierteil beim Einstecken des Steckeinsatzes richtig ausgerichtet wird, kann am Isolierteil eine Verdrehsicherung vorgesehen sein. Dies kann beispielsweise eine Anschlagfläche oder ein ausgebildeter Fortsatz am Bund des Isoliereinsatzes sein, die/der formschlüssig in das Gehäuse eingreift.

Weiterhin kann das Isolierteil derart gestaltet sein, dass dem Steckeinsatz beim Anziehen der Schraube eine Bewegung entlang der Mittelachse ermöglicht wird. Dabei kann eine Bewegung entlang der Mittelachse von bis zu 5mm in Richtung des Gehäuseinnenraums ermöglicht werden, wobei der Bund derart elastisch gestaltet ist, dass in jeder Position eine Abdichtung gegenüber dem Gehäuse gewährleistet ist.

Weiterhin kann das Isolierteil neben dem Bund mehrere umlaufende Dichtlippen aufweist, mittels denen eine Abdichtung des Gehäuseinnenraums gegenüber der Umwelt erreicht wird, wobei die Dichtlippen ein Kippen von 0 bis 5 Grad gegenüber der Mittelachse ermöglichen.

Der erfindungsgemäße Steckeinsatz für das beschriebene Koppelsystem umfasst ein Isolatorteil in dem eine Hülse und eine Scheibenmutter fixiert sind, wobei das Isolatorteil eine Aussparung aufweist, die derart angeordnet ist, dass die Stromschiene durch die Aussparung zwischen der Hülse und der Scheibenmutter bewegbar ist. Weiterhin sind am Isolierteil Fixiernasen zur Lagefixierung der Hülse und der Scheibenmutter im Isolierteil vorgesehen.

Anhand von Ausführungsbeispielen werden weitere vorteilhafte Ausprägungen der Erfindung erläutert.

Die Figuren zeigen im Einzelnen:
- Fig.1: ein Koppelsystem
- Fig.2: einen Steckeinsatz im Schnitt

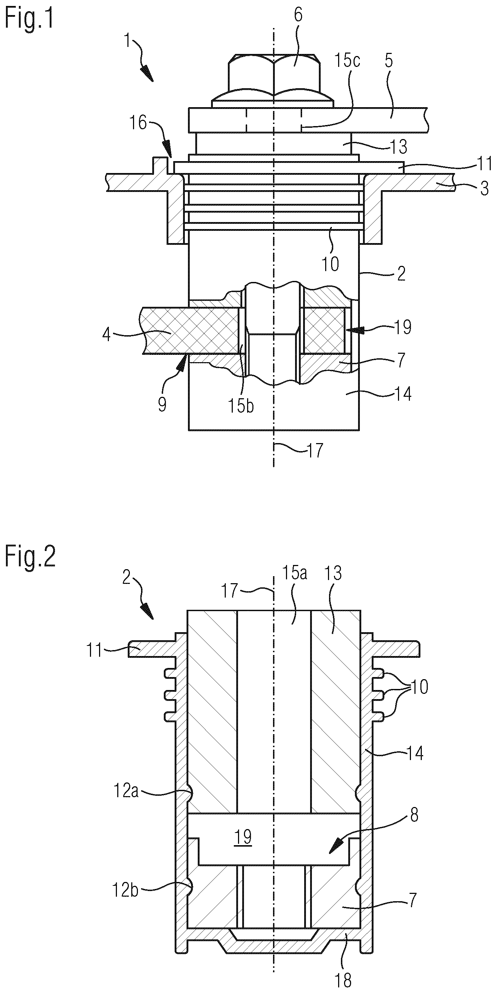

Figur 1 zeigt ein erfindungsgemäßes Koppelsystem 1 zur Herstellung einer elektrischen Verbindung zwischen zwei elektrischen Komponenten. Der hier dargestellte Ausschnitt zeigt allerdings nur die erfindungswesentlichen Details eines einzelnen Koppelsystems. Innerhalb des Gehäuses ist eine hier nicht dargestellte erste Komponente, z.B. eine E-Maschine eines Hybridantriebes, positioniert. Der Leistungsanschluss des Stators der E-Maschine erfolgt über einen mehrpoligen, insbesondere dreipoligen Anschluss, wobei jeder Pol über je eine Stromschienen 4 mit elektrischer Leistung beaufschlagbar ist. Die zweite Komponente, der Umrichter, ist außerhalb des Gehäuses 3 angeordnet. Vom Umrichter kommend ist jede Stromschiene 5 des mehrpoligen Anschlusses über je einen flexiblen Stromanschluss 4 an dem Umrichter angeschlossen. Das Koppelsystem 1 stellt die elektrisch leitende Verbindung zwischen einer Stromschiene 4 und einem Stromanschluss 5, mittels des in das Gehäuse 3 einsteckbaren Steckeinsatzes 2, her.

Die Figur 2 zeigt den Steckeinsatz 2 im Schnitt, so dass die einzelnen Bauteile sichtbar sind. Die Hülle bildet das Isolatorteil 14, das aus einem elektrisch isolierenden, flexiblen und vorzugsweise flammhemmenden Material besteht. Das Isolierteil 14 hat einen Bund 11, mittels dem eine erste Abdichtung gegenüber dem Gehäuse 3 erreicht wird. Um eine axiale Beweglichkeit des Steckeinsatzes 2 entlang der Mittelachse 17 zu ermöglichen, kann dieser auch als kegelförmige Dichtlippe ausgeführt sein. In dem Isolierteil 2 ist die Scheibenmutter 7 und die, aus sehr gut stromleitendem Material bestehende, Hülse 13 positioniert. Beide Bauteile 7, 13 werden in das Isolierteil 14 eingeschoben, bis die jeweiligen Fixiernasen 15a, b in die Bauteile einrasten. In die Scheibenmutter 7 ist die Nut 8 eingearbeitet, durch die die Mutter gegen Verdrehen gesichert ist, wenn die Stromschiene 4 eingreift. Der Boden 18 des Isolierteils verhindert ein Herausfallen der Scheibenmutter 7 in den Gehäuseinnenraum. Im Bereich der Nut 8 ist eine hier nicht dargestellte Aussparung 9 im Isolierteil 14, durch die die Stromschiene 4 in den Steckeinsatz gesteckt werden kann.

Zur Herstellung des Koppelsystems 1 wird der vormontierte Steckeinsatz 2 in eine dafür vorgesehene Öffnung im Gehäuse 3 eingeschoben. Zur Abdichtung der Öffnung sind neben dem Bund 11 drei umlaufenden Dichtlippen 10 vorgesehen, die derart flexibel sind, dass ein Toleranzausgleich in allen drei Achsen realisiert werden kann.

Für jede Stromschiene 4 der E-Maschine ist ein Steckeinsatz 2 vorgesehen. Aufgrund der Fertigungstoleranzen weisen insbesondere die Stromschienen 4 eine hohe Toleranzschwankung auf, bzw. die Lage der Stromschienen 4 im Raum unterliegt relativ großen Schwankungen. Diese Schwankungen muss der Steckeinsatz 2 ausgleichen können, ohne dass Zwangskräfte auf die Stromschiene 4 ausgeübt werden.

Durch den Aufbau des Steckeinsatzes 2 kann eine Blindmontage der E-Maschine oder des Stators erfolgen. Trotz der Lageschwankungen der Stromschienen 4 im Raum kann das realisiert werden, weil der Abstand zwischen Scheibenmutter 7 und Hülse 13 entsprechend groß gewählt wurden. Nach dem Auflegen des flexiblen Stromanschlusses 5 wird die Schraube 6 durch die Bohrungen 15 a, b, c des Stromanschlusses 5, der Hülse 13 und der Stromschienen 4 eingesteckt und in die Scheibenmutter 7 eingeschraubt, so dass die Bauteile zueinander verklemmt werden. Bei der Verklemmung wird der Klemmraum 19 verkleinert, wobei die Flexibilität des Isolierteils 14 die Verkleinerung des Abstandes zwischen Hülse 13 und Scheibenmutter 7 dadurch ausgleicht, dass sich das Isolierteil 14 im Bereich des Klemmraums verformt. Die Kontaktflächen an Hülse 13, Stromschiene 4 und Scheibenmutter 7 können sich ideal anschmiegen, so dass eine betriebssichere Stromübertragung gewährleistet ist.

Die Flexibilität des Isolierteils 14 ermöglicht es weiterhin, dass der Steckeinsatz 2 insgesamt immer ausgehend von der geklemmten Stromschiene 4 ausgerichtet wird, so dass eine zwangsfreie, prozesssichere und funktionssichere Verbindung hergestellt wird. Anders ausgedrückt bedeutet das, dass sich der Steckeinsatz 2 durch die Flexibilität der Isolierhülse 14 gegenüber dem Gehäuse 3 im Raum ausgerichtet wird, wobei die Richtung der Ausrichtung von der Stromschiene 4 vorgegeben wird.

## Patentansprüche

1. Steckeinsatz (2) für ein Koppelsystem (1) zur Herstellung einer elektrischen Verbindung zwischen zwei elektrischen Komponenten, wobei die erste Komponente in einem Gehäuse (3) positioniert ist und zumindest eine Stromschiene (4) und die zweite Komponente außerhalb des Gehäuses angeordnet ist und zumindest einen Stromanschluss (5) umfasst, und wobei mittels dem Steckeinsatz (2) eine elektrisch leitende Verbindung zwischen der Stromschiene (4) und dem Stromanschluss (5) herstellbar ist, wobei der Steckeinsatz (2) ein Isolierteil (14) umfasst, in dem eine Hülse (13) fixiert ist,
**dadurch gekennzeichnet**
**dass** eine Scheibenmutter (7) in dem Isolierteil (14) fixiert ist, wobei das Isolierteil (14) eine Aussparung (9) aufweist, die derart angeordnet ist, dass die Stromschiene (4) durch die Aussparung (9) zwischen die Hülse (13) und die Scheibenmutter (7) einbringbar ist.

2. Steckeinsatz (2) nach Anspruch 1,
**dadurch gekennzeichnet,**
**dass** das Isolierteil (14) aus einem elastischen Material besteht und Dichtlippen (10) sowie einen Bund (11) aufweist.

3. Steckeinsatz (2) nach Anspruch 1,
**dadurch gekennzeichnet,**
**dass** die Hülse (13) eine Bohrung (15a) aufweist, durch die eine Schraube (6) steckbar ist, so dass der Stromanschluss (5), die Hülse (13) und die Stromschiene (4) zwischen Schraube (6) und Scheibenmutter (7) zueinander fixierbar sind.

4. Steckeinsatz (2) nach Anspruch 1,
**dadurch gekennzeichnet,**
**dass** das Isolierteil (2) eine Verdrehsicherung (16) aufweist.

5. Steckeinsatz (2) nach Anspruch 4,
**dadurch gekennzeichnet,**
**dass** die Verdrehsicherung (16) ein an dem Isolierteil (14) ausgebildeter Fortsatz ist.

6. Steckeinsatz (2) nach Anspruch 3,
**dadurch gekennzeichnet,**
**dass** das Isolierteil (14) derart gestaltet ist, dass dem Steckeinsatz (2) beim Anziehen der Schraube (6) eine Bewegung entlang der Mittelachse (17) ermöglicht wird.

7. Steckeinsatz (2) nach Anspruch 6,
**dadurch gekennzeichnet,**
**dass** eine Bewegung entlang der Mittelachse (17) von bis zu 5mm in Richtung des Gehäuseinnenraums ermöglicht wird, wobei der Bund (11) derart elastisch gestaltet ist, dass in jeder Position eine Abdichtung gegenüber dem Gehäuse (3) gewährleistet ist.

8. Steckeinsatz (2) nach Anspruch 1,
**dadurch gekennzeichnet,**
**dass** das Isolierteil (14) mehrere umlaufende Dichtlippen (10) aufweist, mittels denen eine Abdichtung des Gehäuseinnenraums gegenüber der Umwelt erreicht wird, wobei die Dichtlippen ein Kippen von 0 bis 5 Grad gegenüber der Mittelachse (17) ermöglichen.

9. Steckeinsatz (2) nach Anspruch 8,
**dadurch gekennzeichnet,**
**dass** das Isolierteil (14) Fixiernasen (12a, b) zur Lagefixierung der Hülse (13) und der Scheibenmutter (7) im Isolierteil aufweist.

10. Fahrzeug umfassend einen Hybridantrieb mit einem Koppelsystem (1) zur Herstellung einer elektrischen Verbindung zwischen zwei elektrischen Komponenten, wobei die erste Komponente in einem Gehäuse (3) positioniert ist und zumindest eine Stromschiene (4) und die zweite Komponente außerhalb des Gehäuses angeordnet ist und zumindest einen Stromanschluss (5) umfasst, und wobei mittels dem Koppelsystem (1) eine elektrisch leitende Verbindung zwischen der Stromschiene (4) und dem Stromanschluss (5) herstellbar ist, umfassend einen Steckeinsatz (2) nach Anspruch 1 bis 9 zum Kontaktieren eines Leistungsanschlusses einer elektrischen Maschine des Hybridantriebes.

## Claims

1. Plug insert (2) for a coupling system (1) for establishing an electric connection between two electric components, wherein the first component is positioned in a housing (3) and comprises at least one busbar (4), and the second component is arranged outside the housing and comprises at least one current connection (5), and wherein an electrically conductive connection can be established between the busbar (4) and the current connection (5) by means of the plug insert (2), wherein the plug insert (2) comprises an insulator part (14), in which a sleeve (13) is fixed,
**characterized in that**
a washer nut (7) is fixed in the insulator part (14), wherein the insulator part (14) has a recess (9) which is arranged such that the busbar (4) can be inserted between the sleeve (13) and the washer nut (7) through the recess (9).

2. Plug insert (2) according to Claim 1,
**characterized in that**
the insulator part (14) is made of an elastic material and has sealing lips (10) and a collar (11).

3. Plug insert (2) according to Claim 1,
**characterized in that**
the sleeve (13) has a bore (15a, b, c) through which a screw (6) can be inserted, so that the current connection (5), the sleeve (13) and the busbar (4) can be fixed relative to one another between the screw (6) and the washer nut (7).

4. Plug insert (2) according to Claim 1,
**characterized in that**
the insulator part (2) has an anti-rotation means (16).

5. Plug insert (2) according to Claim 4,
**characterized in that**
the anti-rotation means (16) is an extension formed on the insulator part (14).

6. Plug insert (2) according to Claim 3,
**characterized in that**
the insulator part (14) is configured in such a way that the plug insert (2) is allowed to move along the center axis (17) when the screw (6) is tightened.

7. Plug insert (2) according to Claim 6,
**characterized in that**
a movement along the center axis (17) of up to 5 mm in the direction of the housing interior is allowed, wherein the collar (11) is configured to be elastic in such a way that a seal against the housing (3) is ensured in any position.

8. Plug insert (2) according to Claim 1,
**characterized in that**
the insulator part (14) has a plurality of circumferential sealing lips (10), by means of which a sealing of the housing interior with respect to the surrounding environment is achieved, wherein the sealing lips allow a tilting of from 0 to 5 degrees with respect to the center axis (17).

9. Plug insert (2) according to Claim 8,
**characterized in that**
the insulator part (14) has fixing lugs (12a, b) to fix the position of the sleeve (13) and the washer nut (7) in the insulator part.

10. Vehicle comprising a hybrid drive with a coupling system (1) for establishing an electric connection between two electric components, wherein the first component is positioned in a housing (3) and comprises at least one busbar (4), and the second component is arranged outside the housing and comprises at least one current connection (5), and wherein an electrically conductive connection can be established between the busbar (4) and the current connection (5) by means of the coupling system (1), comprising a plug insert (2) according to Claims 1 to 9 for contacting a power connection of an electric machine of the hybrid drive.

## Revendications

1. Insert enfichable (2) pour un système de couplage (1) destiné à établir une connexion électrique entre deux composants électriques, le premier composant étant positionné dans un boîtier (3) et comprenant au moins une barre conductrice (4) et le deuxième composant étant disposé à l'extérieur du boîtier et comportant au moins une borne électrique (5), et une connexion électriquement conductrice pouvant être établie entre la barre conductrice (4) et la borne électrique (5) au moyen de l'insert enfichable (2),
l'insert enfichable (2) comprenant une pièce isolante (14) dans laquelle est fixée une douille (13),
**caractérisé en ce que**
un écrou à rondelle (7) est calé dans la pièce isolante (14), la pièce isolante (14) possédant un évidement (9) qui est disposé de telle sorte que la barre conductrice (4) peut être introduite à travers l'évidement (9) entre la douille (13) et l'écrou à rondelle (7).

2. Insert enfichable (2) selon la revendication 1,
**caractérisé en ce que**
la pièce isolante (14) est constituée d'un matériau élastique et possède des lèvres d'étanchéité (10) ainsi qu'un collet (11).

3. Insert enfichable (2) selon la revendication 1,
**caractérisé en ce que**
la douille (13) possède un alésage (15a) à travers lequel peut être insérée une vis (6), de telle sorte que la borne électrique (5), la douille (13) et le rail conducteur (4) peuvent être calés les uns par rapport aux autres entre la vis (6) et l'écrou à rondelle (7).

4. Insert enfichable (2) selon la revendication 1,
**caractérisé en ce que**
la pièce isolante (2) possède un dispositif antirotation (16).

5. Insert enfichable (2) selon la revendication 4,
**caractérisé en ce que**
le dispositif antirotation (16) est un prolongement formé sur la pièce isolante (14).

6. Insert enfichable (2) selon la revendication 3,
**caractérisé en ce que**
la pièce isolante (14) est conçue de telle sorte qu'un mouvement de l'insert enfichable (2) le long de l'axe central (17) est rendu possible lors du serrage de la vis (6).

7. Insert enfichable (2) selon la revendication 6,
**caractérisé en ce que**
un mouvement le long de l'axe central (17) pouvant atteindre 5 mm en direction de l'intérieur du boîtier est rendu possible, la collerette (11) étant de configuration élastique de telle sorte qu'une étanchéité par rapport au boîtier (3) est garantie dans toutes les positions.

8. Insert enfichable (2) selon la revendication 1,
**caractérisé en ce que**
la pièce isolante (14) possède plusieurs lèvres d'étanchéité périphériques (10) au moyen desquelles est réalisée l'étanchéité de l'espace intérieur du boîtier par rapport à l'environnement, les lèvres d'étanchéité permettant un basculement de 0 à 5 degrés par rapport à l'axe central (17).

9. Insert enfichable (2) selon la revendication 8,
**caractérisé en ce que**
la pièce isolante (14) possède des ergots de calage (12a, b) servant à caler la position du manchon (13) et de l'écrou à rondelle (7) dans la pièce isolante.

10. Véhicule comprenant un système de propulsion hybride avec un système d'accouplement (1) destiné à établir une connexion électrique entre deux composants électriques, le premier composant étant positionné dans un boîtier (3) et comprenant au moins une barre conductrice (4) et le deuxième composant étant disposé à l'extérieur du boîtier et comportant au moins une borne électrique (5), et une connexion électriquement conductrice pouvant être établie entre la barre conductrice (4) et la borne électrique (5) au moyen du système d'accouplement (1), comprenant un insert enfichable (2) selon les revendications 1 à 9 destiné à établir le contact avec une borne de puissance d'une machine électrique du système de propulsion hybride.
